# EUROPEAN PATENT SPECIFICATION

(11) **EP 4 395 912 B1**
(45) Date of publication and mention of the grant of the patent: **11.03.2026**
(21) Application number: 22722959.8
(22) Date of filing: 25.04.2022
(51) Int. Cl.: B01D 46/02, B01D 46/24, B01D 46/52

(54) **HOT GAS FILTRATION WITH ENHANCED COMPARTMENTAL FLOW DISTRIBUTION VIA DUAL FILTER CONFIGURATIONS**
HEISSGASFILTRATION MIT VERBESSERTER KOMPARTIMENTALER STRÖMUNGSVERTEILUNG ÜBER DUALE FILTERKONFIGURATIONEN
FILTRATION DE GAZ CHAUD AYANT UNE DISTRIBUTION DE FLUX COMPARTIMENTALE AMÉLIORÉE PAR CONFIGURATIONS À DOUBLE FILTRE

(30) Priority: 15.12.2021 US 202163289762 P; 08.03.2022 US 202263317622 P
(43) Date of publication of application: 10.07.2024
(73) Proprietor: Parker-Hannifin Corporation, Cleveland, Ohio 44124 (US)
(72) Inventor: TEE, Yit-Hong, Lees Summit, Missouri 64063 (US)
(74) Representative: Murgitroyd & Company
(86) International application number: PCT/US2022/026152
(87) International publication number: WO 2023/113853

(56) References cited:
- CN-A- 110 339 637
- US-A1- 2013 125 754

## Description

### FIELD OF THE INVENTION

This invention generally relates to filtration system and, particularly, filtration systems for gases.

### BACKGROUND OF THE INVENTION

There is increasing environmental regulation and controls being implemented in many parts of the world focused on reducing air-borne pollutants and emissions from certain industrial sources, such as power plants and materials production facilities. It is possible to control the pollutants and emissions from various industrial sources by separating undesirable particulate matter that is carried in a gas stream by fabric filtration, for example. Such fabric filtration is accomplished in a dust collection apparatus known in the industry as a "baghouse."

A conventional baghouse typically includes a housing divided into two plenums by a tube sheet. One plenum is a "dirty air" plenum which communicates with an inlet and receives "dirty" or particulate laden gas from a source at the plant. The other plenum is a "clean air" plenum which receives cleaned gas after filtration and communicates with an outlet to direct cleaned gas away from the baghouse. In conventional baghouses, a plurality of relatively long cylindrical fabric filters, commonly called "bag filters," are suspended from the tube sheet in the dirty air plenum. Each bag filter has a closed lower end and is installed over a cage. Each bag is mounted to the tube sheet at its upper end and hangs vertically downward into the dirty air plenum. The upper end portion of the bag filter is open, and the interior of each bag filter is in fluid communication with the clean air plenum.

In operation, particulate-laden gas is conducted into the dirty air plenum. As the particulate-laden gas flows through the baghouse, the particulates carried by the gas engage the exterior of the bag filter media and accumulate on or in the media. Alternatively, the particulates may be separated from the gas stream prior to reaching the bag filter, and fall into an accumulator chamber at the lower portion of the dirty air plenum. The filtered gas then flows through the media of the fabric filter bags, into the interior of the filter bags, to the clean air plenum and out through the outlet. Although many baghouses are made according to this basic structure, there may be numerous operational and structural differences among baghouses.

In view of the various shortcomings associated with conventional baghouse filter systems, it would be desirable in the industry to have a filter assembly system that provides many of the advantages of the relatively long bag filters while also addressing some of the aforementioned shortcomings.

Embodiments of the present invention provide such a filter assembly system. These and other advantages of the invention, as well as additional inventive features, will be apparent from the description of the invention provided herein.

The following documents may provide technical background to the present disclosure: US2013/125754 A1 and CN110339637 A.

### BRIEF SUMMARY OF THE INVENTION

Embodiments of the present invention relate to utilization of both a pleated filter and long bag filter simultaneously that is shown to achieve enhanced compartmental flow distribution results in favored lower operating differential pressure. One feature of the present invention involves simultaneously utilizing a plurality of pleated filter in combination with a plurality of conventional long bag filters where both types of filters are designed to operate continuously at 260 °C (500 degrees Fahrenheit). In this context, operating continuously at 260 °C (500 degrees Fahrenheit) involves continuous filtration of a gas or gases having an average temperature of 260 °C (500 degrees Fahrenheit). Conventional industrial filtration applications do not include the simultaneous use of both pleated filters and long bag filters both operating continuously at 260 °C (500 degrees Fahrenheit).

In one aspect, embodiments of the invention provide a filtration as defined in appended claim 1. Optional features are defined in the appended dependent claims.

In a particular embodiment, a first filter media in the plurality of elongated bag filters and a second filter media in the plurality of cylindrical pleated filters are each configured to continuously filter the gas having an average temperature of 260 °C (500 degrees Fahrenheit).

In some embodiments, the average length of the plurality of elongated bag filters is between two and five times the average length of the plurality of cylindrical pleated filters. Embodiments of the invention further include those in which the filter housing is rectangular, and the plurality of elongated bag filters and the plurality of cylindrical pleated filters are arranged in alternating rows. In such an arrangement, the number of elongated bag filters may be equal, or nearly equal, to the number of cylindrical pleated filters.

In alternate embodiments, the filter housing is rectangular, and the plurality of elongated bag filters and the plurality of cylindrical pleated filters are arranged in rows where every two rows of elongated bag filters is separated by one row of cylindrical pleated filters. In such an arrangement, there are at least three elongated bag filters for every two cylindrical pleated filters.

In yet another embodiment, the filter housing is rectangular, and the plurality of elongated bag filters and the plurality of cylindrical pleated filters are arranged in rows where every three rows of elongated bag filters is separated by one row of cylindrical pleated filters. In such an arrangement, there are at least five elongated bag filters for every two cylindrical pleated filters.

In some embodiments, a hopper is situated below, and supports, the filter housing. The length of each of the plurality of elongated bag filters may range from 4 meters to 15 meters, while the length of the plurality of cylindrical pleated filters may range from 1 meter to 4 meters.

In a further embodiment, each of the plurality of elongated bag filters comprises a media bag supported by a frame, wherein each elongated bag filter has an open upstream end and a closed downstream end. Embodiments of the invention include the filter housing having an inlet for receiving hot gases, the inlet located in a lower portion of the filter housing, and having an outlet for discharging filtered hot gases, the outlet located in an upper portion of the filter housing.

In a particular embodiment, a pressure differential between the inlet and outlet is less than 85% of the pressure differential that would result if each of the plurality of cylindrical pleated filters was replaced by a similar number of elongated bag filters. In a further embodiment, the pressure differential between the inlet and outlet is less than 80% of the pressure differential that would result if each of the plurality of cylindrical pleated filters was replaced by a similar number of elongated bag filters. In yet another embodiment, the pressure differential between the inlet and outlet is less than or equal to 76% of the pressure differential that would result if each of the plurality of cylindrical pleated filters was replaced by a similar number of elongated bag filters.

In the claimed invention, the gas passing through the filter housing is filtered in parallel. For the purposes of this application, "filtered in parallel" refers to a filter arrangement in which gas flows through either one of the cylindrical pleated filters, or one of the elongated bag filters, but not both. This parallel filter arrangement is opposed to a series filter arrangement in which a flow of gas passing through the filter housing is filtered through at least one of the cylindrical pleated filters, then through at least one of the elongated bag filters.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a perspective view of a gas filtration system, constructed in accordance with an embodiment of the invention;
FIG. 2 is a perspective view of the cylindrical pleated filter, according to an embodiment of the invention;
FIG. 3 is a perspective view of a disassembled elongated bag filter, according to an embodiment of the invention; and
FIG. 4 is a side view of a plurality of pleated filter elements as used in a pulse jet baghouse, according to an embodiment of the invention;
FIG. 5 is a bottom perspective view of the plurality of pleated filter elements in the baghouse of FIG. 4;
FIG. 6 is a schematic illustration of a pulse jet baghouse with a plurality of pleated filter elements installed;
FIG. 7 is a graphical illustration showing the relationship between differential pressure and the number of pleated filters;
FIG. 8 is a horizontal cross-sectional view of the pleated filter element of FIG. 2;
FIG. 9 is a side view of a support core that is used in the pleated filter element of FIG. 2;
FIG. 10A is a perspective cross-sectional view of an example of an open endcap and support core that may be used for the pleated filter element of FIG. 2;
FIG 10B is a schematic cross-section similar to FIG. 10A of the open endcap, but schematically indicating how the open endcap engages with a felt line projection on a modified tube sheet for sealing to prevent unfiltered airflow; and
FIG. 11 is a perspective view of a closed endcap, a pleated filter element, and a support core, that may be used for the pleated filter element of FIG. 2.

While the invention will be described in connection with certain preferred embodiments, there is no intent to limit it to those embodiments. On the contrary, the intent is to cover all alternatives, modifications and equivalents as included within the scope of the invention as defined by the appended claims.

### DETAILED DESCRIPTION OF THE INVENTION

In view of the issues and challenges described above with respect to conventional baghouse filter systems, there is interest in replacing known fabric filter bags with pleated media filter cartridges to increase the effective filtering area while occupying the same, or less, space within the baghouse. However, certain barriers to easy replacement of fabric filter bags by pleated media filter cartridges exist. In some baghouse designs, the fabric filter bags can have a length of about four meters or more. The clean air plenum often has a clearance height that is substantially less than four meters, for example, about two meters. It is generally not a problem to install fabric filter bags in the baghouse since the fabric filter bags are foldable, flexible and non-rigid. A relatively long and rigid pleated media filter cartridge cannot be installed without considerable manipulation if it can be installed at all due to the limited access space in the clean air plenum.

In order to occupy the same space within the baghouse as a fabric filter bag, the length of the pleated media filter cartridge would be relatively long and can be up to about four meters in length or more. In the embodiments of the invention described below, the length of the pleated media filter cartridges may be as short as one meter, or even shorter in some cases, and as long as four meters though even greater lengths are contemplated.

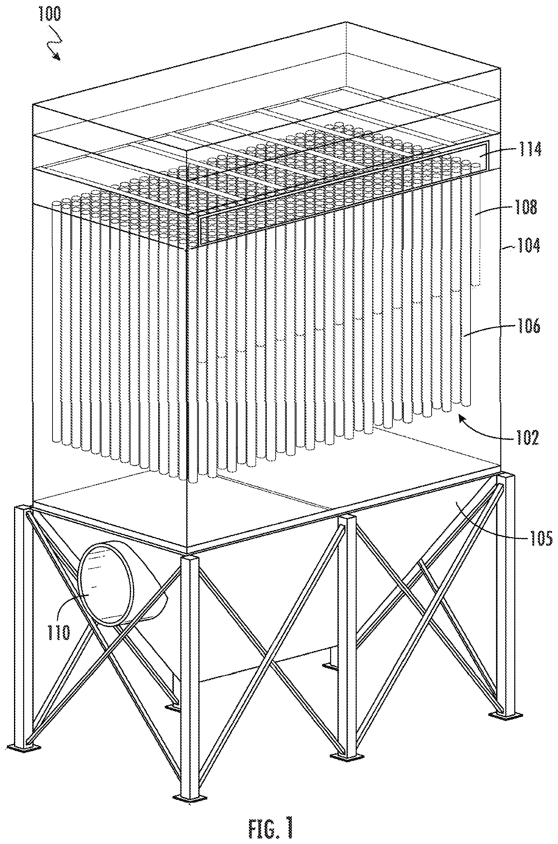

FIG. 1 is a perspective view of a filtration system 100, more specifically a gas filtration system 100, constructed in accordance with an embodiment of the invention. The filtration system 100 includes an assembly of filter elements 102 disposed within a filter housing 104, which is supported by a hopper 105. The filter assembly 102 includes a plurality of elongated bag filters 106 disposed in the filter housing 104, and a plurality of cylindrical pleated filters 108 also disposed in the filter housing 104.

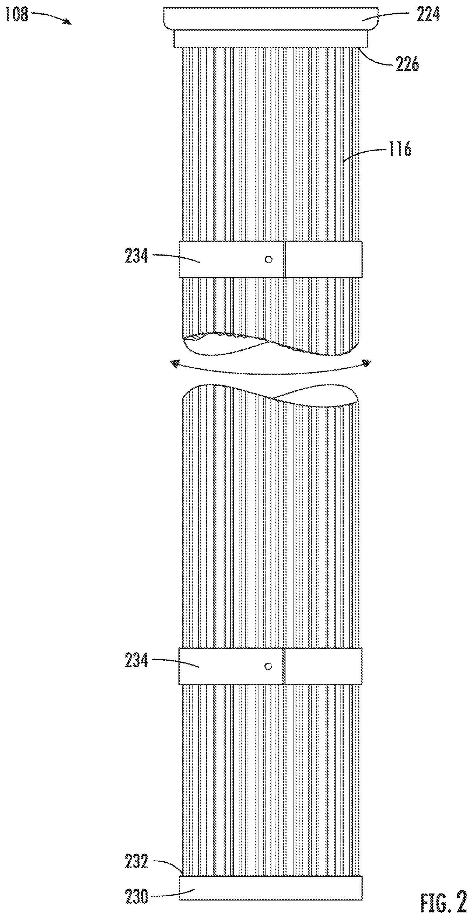

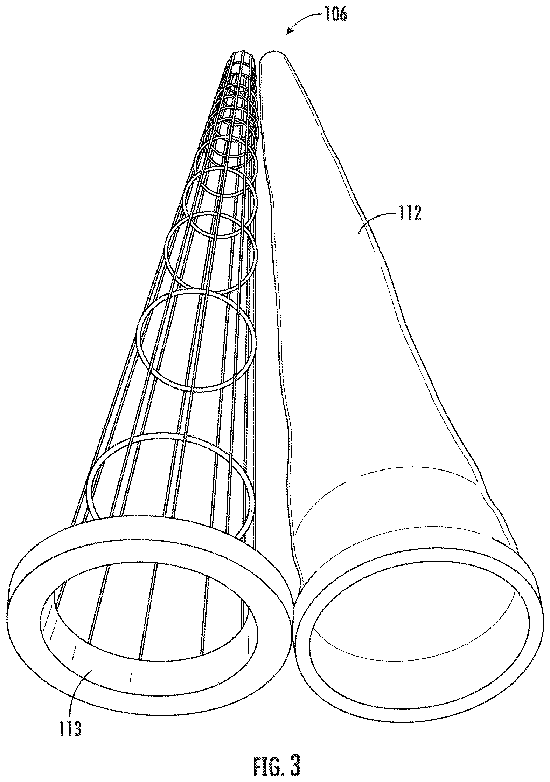

FIG. 2 is a perspective view of the cylindrical pleated filter 108, according to an embodiment of the invention. FIG. 3 is a perspective view of a disassembled elongated bag filter 106, according to an embodiment of the invention. The plurality of elongated bag filters 106 and the plurality of cylindrical pleated filters 108 are arranged in order to filter a gas passing through the filter housing 104. Additionally, in particular embodiments, the average length of the plurality of elongated bag filters 106 is at least twice the average length of the plurality of cylindrical pleated filters 108.

In the filtration system 100 of FIG. 1, there is an assembly 102 of filter elements for a filter housing 104 for gas filtration. In specific embodiments, the filter assembly 102 includes a grouping of evenly-arranged and evenly-distributed elongated bag filters 106 and cylindrical pleated filters 108 disposed so as to filter gasses passing through the filter housing 104. As mentioned above, the length of the elongated bag filters 106 is typically at least twice as long as the length of the cylindrical pleated filters 108.

In certain applications, for example filtering the hot gaseous exhaust emitted as a byproduct of the cement manufacturing process, an elongated filter media 112 in the plurality of elongated bag filters 106 and a pleated filter media 116 in the plurality of cylindrical pleated filters 108 are each configured to continuously filter gas having an average temperature of 260 °C (500 degrees Fahrenheit).

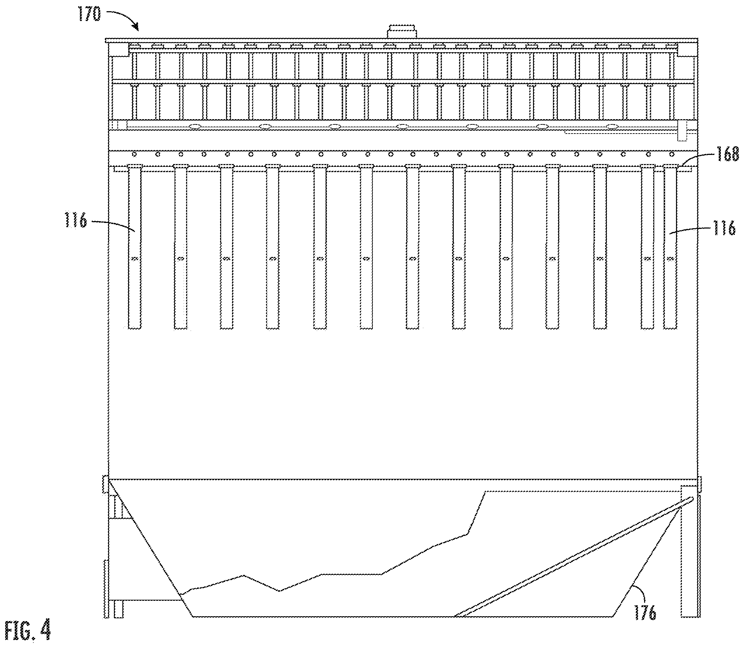

Referring to FIGS. 4-6, exemplary filter house applications and a method of using the filter cartridges 108 including the pleated filter media 116 are illustrated. The filter cartridges 108 are installed into a tube sheet 168 of a filter house 170, for instance a reverse pulse filter house. The filter cartridges 108 can be sealed to the tube sheet 168. For a high temperature application, such as a cement kiln application, the pleated filter element 116 can be continuously operated for at least several hours at an elevated temperature of at least 260 °C (500 degrees Fahrenheit) to remove particulates from an air stream passing through the pleated filter element 116 from an unfiltered air inlet 172 to a filtered air outlet 174.

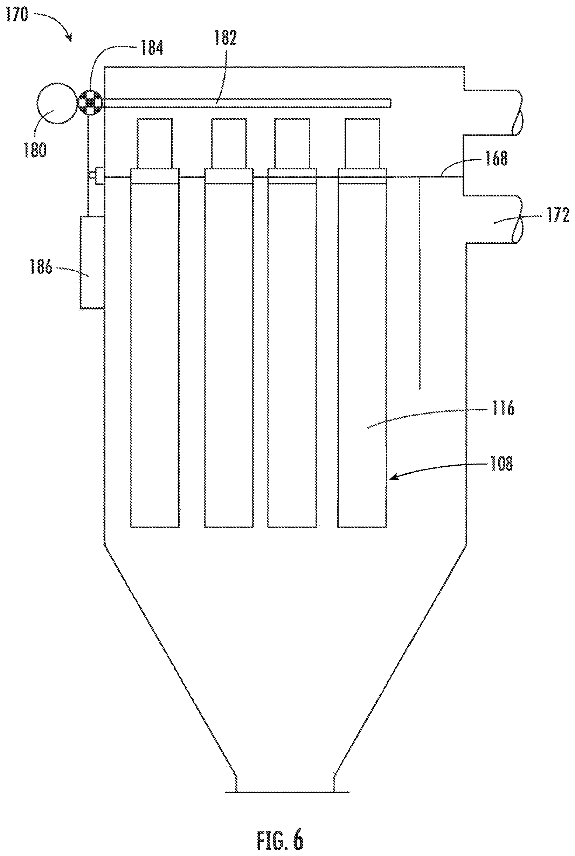

The filter cartridge 108 along with its pleated filter element 116 in this application is periodically reverse pulsed to dislodge filter cake collected on the pleated filter element 116. For example, as shown schematically in FIG. 6, the filter house 170 includes a compressed air source 180 that is connected to a back-pulse compressed air manifold 182 via a solenoid valve 184. In some embodiments, a hopper 176 is situated below, and supports, the filter house 170. The hopper 176 collects the dislodged filter cake following application of a reverse pulse to the pleated filter element 116.

A controller 186 at timed intervals or when sensing pressure differentials indicating dust cake loads will periodically open the solenoid valve 184 to create a jet pulse of air through the manifold 182 that back pulses air through the filter cartridges 108 to dislodge accumulated filter cake upon the pleated filter elements 116.

When installed in a filter house 170, for instance a typical pulse jet baghouse, the filter cartridge 108 is in in parallel circuit with other similar filter cartridges 108 along a tube sheet 168 that divides the filter housing into a clean chamber and a dirty chamber. Unfiltered or dirty gas passes from the inlet 172 through the pleated filter elements 116 of the filter cartridges 108, removing particulates. This, in turn, creates filtered air that passes into the clean chamber that can exit the house 170 through the outlet 174. Periodically, a pulse jet system will pulse air to remove "filter cake" from the pleated filter elements 116 to be collected at the bottom of the filter house 170, and therefore regenerate the lifespan of the pleated filter media 116 of the filter cartridges 108. As referenced above, the cylindrical pleated filter 108 are particularly useful in elevated temperature applications, such as cement kiln filtration applications, where operating temperatures are often above 260 °C (500 degrees Fahrenheit). This can occur for long periods of continuous operation over several hours, days, or weeks.

Referring again to FIG. 1, in a particular embodiment, the filter housing 104 is rectangular, and the plurality of elongated bag filters 106 and the plurality of cylindrical pleated filters 108 are arranged in rows where every three rows of elongated bag filters 106 is separated by one row of cylindrical pleated filters 108. In such an arrangement, there are at least five elongated bag filters 106 for every two cylindrical pleated filters 108.

In alternate embodiments, the filter housing 104 is rectangular, and the plurality of elongated bag filters 106 and the plurality of cylindrical pleated filters 108 are arranged in rows where every two rows of elongated bag filters 106 is separated by one row of cylindrical pleated filters 108. In such an arrangement, there are at least three elongated bag filters 106 for every two cylindrical pleated filters 108.

The filter housing 104 has an inlet 110 for receiving hot gases. The inlet 110 may be located in a lower portion of the filter housing 104 or in the hopper 105, as shown in FIG. 1. The filter housing 104 has an outlet 114 for discharging filtered hot gases, the outlet 114 located in an upper portion of the filter housing 104.

As a result of the use of both elongated bag filters 106 and cylindrical pleated filters 108, the filtration system 100 exhibits an improved compartmental flow distribution as compared to conventional filtration systems with only elongated bag filters 106. The improved compartmental flow distribution results in a lower differential pressure drop. A reduced differential pressure between the inlet 110 and the outlet 114 is indicative of improved performance of the filtration system 100.

One of ordinary skill in the art will recognize that the embodiments of the gas filtration system 100 disclosed herein provide for the gas to pass through the filter housing 104 while being filtered in parallel. As explained above, in the context of this application, "filtered in parallel" refers to a filter arrangement in which gas flows through either one of the cylindrical pleated filters 108, or one of the elongated bag filters 106, but not both. This parallel filter arrangement is opposed to a series filter arrangement in which a flow of gas passing through the filter housing 104 is filtered through at least one of the cylindrical pleated filters 108, then through at least one of the elongated bag filters 106.

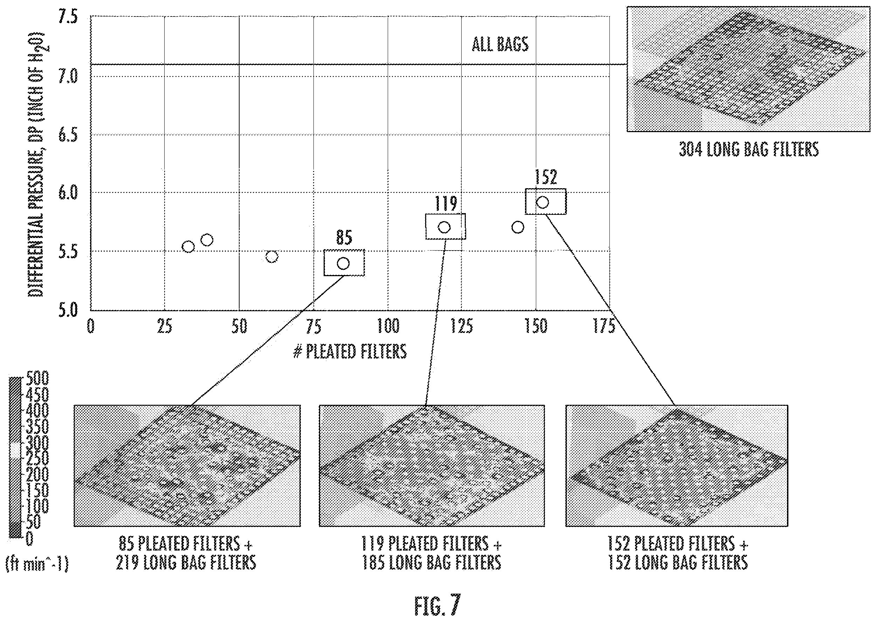

FIG. 7 is a graphical illustration showing the relationship between differential pressure and the number of pleated filters. As shown, empirical test data for a filtration system with elongated bag filters 106 shows a differential pressure of about 7.1. FIG. 7 includes test data for differential pressure in three exemplary filtration systems 100 with a combination of elongated bag filters 106 and cylindrical pleated filters 108. A first system with 152 elongated bag filters 106 and 152 cylindrical pleated filters 108 had a differential pressure of about 5.9. A second system with 185 elongated bag filters 106 and 119 cylindrical pleated filters 108 had a differential pressure of about 5.7. A third system with 219 elongated bag filters 106 and 85 cylindrical pleated filters 108 had a differential pressure of about 5.4.

Based on the foregoing test numbers, the pressure differential between the inlet 110 and outlet 114 for the aforementioned first system is less than 85% of the pressure differential that would result if each of the plurality of cylindrical pleated filters 108 was replaced by a similar number of elongated bag filters 106. The pressure differential between the inlet 110 and outlet 114 for the aforementioned second system is less than 80% of the pressure differential that would result if each of the plurality of cylindrical pleated filters 108 was replaced by a similar number of elongated bag filters 106. The pressure differential between the inlet 110 and outlet 114 for the aforementioned third system is less than or equal to 76% of the pressure differential that would result if each of the plurality of cylindrical pleated filters 108 was replaced by a similar number of elongated bag filters 106.

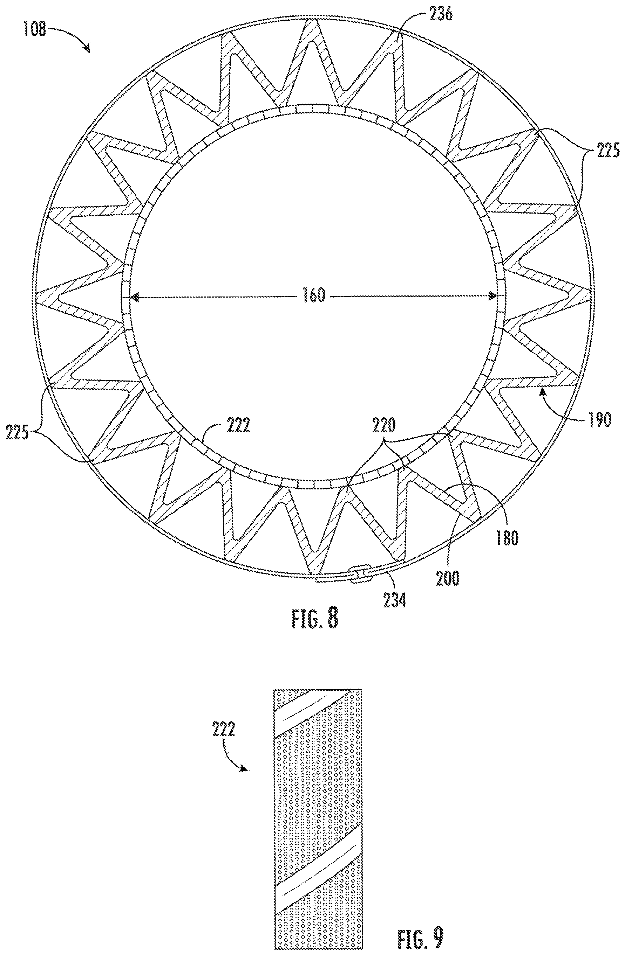

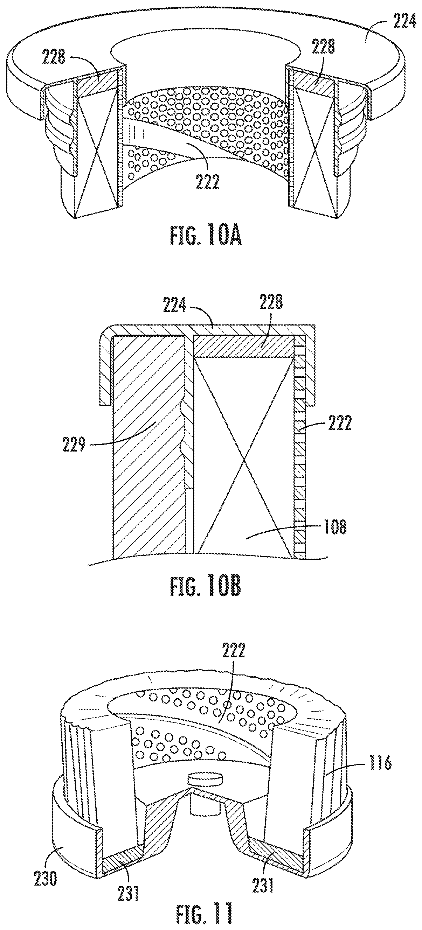

FIG. 8 is a horizontal cross-sectional view of the cylindrical pleated filter 108, according to an embodiment of the invention. FIG. 9 is a side view of a support core 222 in the cylindrical pleated filters 108. FIG. 10A is a perspective cross-sectional view of an exemplary open endcap 224 and support core 222 for use in the cylindrical pleated filter 108. FIG 10B is a schematic cross-section similar to FIG. 10A of the open endcap 224, but schematically indicating how the open endcap 224 functions to prevent unfiltered airflow. FIG. 11 is a perspective view of a closed endcap 230, a portion of the pleated filter media 116, and support core 222, as incorporated in the cylindrical pleated filters 108.

The pleated filter element 116 is formed from a filter media composite 190 (also referred to as a composite or laminated composite), as shown in FIG. 8, to include a fibrous support layer 180 and a filtration layer 200 bonded to the fibrous support layer 180. When arranged in the filter cartridge 108 of FIG. 2, the fibrous support layer 180 is positioned along the central cavity 160 and faces radially inward, as depicted in FIG. 8. The filtration layer 200 is positioned on a radially outboard surface of the fibrous support layer 180 for first inception of incoming unfiltered air flow.

To provide additional support for the filter media composite 190 when incorporated into the cylindrical pleated filter 108, a support core 222 may be used as shown in FIG. 8. The support core 222 is arranged to contact and support the fibrous support layer 180. The support core 222 can be a metal perforated cylindrical tube, as illustrated in FIG. 9. The support core 222 supports an inner periphery of the cylindrical pleated filter 108 along the central cavity 160. In particular, the support core 222 is arranged to contact the inner facing pleat tips 220.

As first shown in FIG. 2, and more detailed in FIG. 10A, an open endcap 224 is attached to a first end 226 of the cylindrical pleated filter 108. For example, the open endcap 224 can include an annular metal pan with a central opening and that has an annular potting well with potting adhesive material that bonds and seals a top end of the pleated filter media 116 to the open endcap 224 to prevent unfiltered bypass therebetween.

As first shown in FIG. 2, and more detailed in FIG. 10A, an open endcap 224 is attached to a first end 226 of the cylindrical pleated filter 108. For example, the open endcap 224 can include an annular metal pan with a central opening and that has an annular potting well with potting adhesive material that bonds and seals a top end of the pleated filter media 116 to the open endcap 224 to prevent unfiltered bypass therebetween.

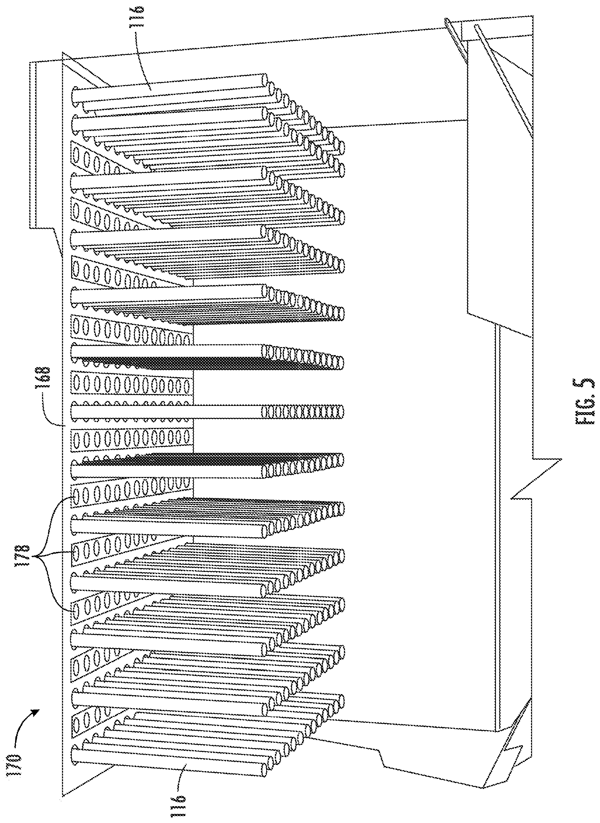

The open 224 may include a seal structure 228 arranged around the first end 226 of the cylindrical pleated filter 108, which may take the form of annular ribs that can engage an annular projection along the tube sheet 168 (shown in FIG. 10B). As shown, the tube sheet 168 has a projection which may include a stitched-and-felted circular metal snap band 229 with a filter metal top that fits the metal snap band. The stitched-and-felted circular metal snap band 229 can first be inserted into the tube sheet hole 178, followed by inserting the filter vertically, and pushing down the metal top of the cylindrical pleated filter 108 to the metal snap band to seal the cylindrical pleated filter 108, thereby preventing bypass (see e.g., FIG. 5 showing the cylindrical pleated filter 108 installed in a tube sheet 168). However, it will be appreciated that any seal useable in filter cartridges can be employed, including annular radial sealing gaskets and annular axial sealing gaskets that can seal against the tube sheet 168 when in use, depending upon tube sheet 168 or filter house 170 configuration.

The open endcap 224 may include a seal structure 228 arranged around the first end 226 of the cylindrical pleated filter 108, which may take the form of annular ribs that can engage an annular projection along the tube sheet 168 (shown in FIG. 10B). As shown, the tube sheet 168 has a projection which may include a stitched-and-felted circular metal snap band 229 with a filter metal top that fits the metal snap band. The stitched-and-felted circular metal snap band 229 can first be inserted into the tube sheet hole 178, followed by inserting the filter vertically, and pushing down the metal top of the cylindrical pleated filter 108 to the metal snap band to seal the cylindrical pleated filter 108, thereby preventing bypass (see e.g., FIG. 5 showing the cylindrical pleated filter 108 installed in a tube sheet 168). However, it will be appreciated that any seal useable in filter cartridges can be employed, including annular radial sealing gaskets and annular axial sealing gaskets that can seal against the tube sheet 168 when in use, depending upon tube sheet 168 or filter house 170 configuration.

As first shown in FIG. 2, and more detailed in FIG. 11, a closed endcap 230 is attached to a second end 232 of the cylindrical pleated filter 108. The closed endcap 230 may include a metal bottom pan that holds a material 231, such as potting adhesive material, as a sealant to the second end 232 of the cylindrical pleated filter 108 to prevent unfiltered bypass at the second end 232.

Furthermore, at least one support strap 234 (shown in FIG. 2) can be positioned in spaced locations between the closed endcap 230 and the open endcap 224 in surrounding supporting relation to the cylindrical pleated filter 108. The support straps 234 provide restraint to support and prevent bursting of a plurality of pleats 236 when back pulsing is applied.

The support straps 234 are arranged to contact the pleat tips that face radially outward and can contact the filtration layer. For example, metal bands suitable for high temperature applications may be used as a support strap 234.

The fibrous support layer 180 and the filtration layer 200 are both in pleated form to provide the plurality of pleats 236, as shown in FIG. 8. Preferably, the fibrous support layer 180 is bonded to the filtration layer 200 by other than a cured stiffening agent. In this manner the filtration layer 200 may not be blocked off by the cured stiffening agent, and the filtration efficiency and permeability of the filter media composite 190 can be maintained.

The cylindrical pleated filters 108 each have a cylindrical arrangement of pleated filter media 116 having radially projecting pleats 225 extending longitudinally along the pleated filter media 116 with an annular upstream endcap 224 defining a central opening 160 and a cylindrical downstream endcap 230 closing the downstream end 232 of the cylindrical pleated filter 108.

In embodiments of the invention more particular than those described above, the average length of the plurality of elongated bag filters 106 is between two and five times the average length of the plurality of cylindrical pleated filters 108. Embodiments of the invention further include those in which the filter housing 104 is rectangular, and the plurality of elongated bag filters 106 and the plurality of cylindrical pleated filters 108 are arranged in alternating rows. In such an arrangement, the number of elongated bag filters 106 may be equal, or nearly equal, to the number of cylindrical pleated filters 108.

In typical applications, the length of each of the plurality of elongated bag filters 106 may range from 4 meters to 15 meters, while the length of the plurality of cylindrical pleated filters 108 may range from 1 meter to 4 meters. In particular embodiments, each of the plurality of cylindrical pleated filters 108 comprises a pleated filter media 116 having radially-projecting pleats 225 (*see* FIG. 8) that extend longitudinally along the pleated filter media 116. In more particular embodiments, each of the plurality of cylindrical pleated filters 108 includes an annular upstream endcap 224 (*see* FIG. 10A) which defines a central opening 160, and a cylindrical downstream endcap 230 (*see* FIG. 10A) that closes a downstream end 232 of the cylindrical pleated filter 108.

In a further embodiment, each of the plurality of elongated bag filters 106 includes the aforementioned elongated filter media 112 supported by a frame 113, wherein each elongated bag filter 106 has an open upstream end 226 and a closed downstream end 232, as shown in FIG. 2. Furthermore, as explained above, each of the elongated bag filters 106 and cylindrical pleated filters 108 include high-temperature media capable of continuous operation at 260 °C (500 degrees Fahrenheit).

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A filtration system (100) comprising:
a filter housing (104);
a plurality of elongated bag filters (106) disposed in the filter housing (104);
a plurality of cylindrical pleated filters (108) disposed in the filter housing (104);
wherein the plurality of elongated bag filters (106) and the plurality of cylindrical pleated filters (108) are arranged in a parallel filter arrangement so as to filter a gas passing through the filter housing (104) in parallel, such that the gas passing through the filter housing (104) flows through either one of the cylindrical pleated filters (108), or one of the elongated bag filters (106), but not both, and wherein the average length of the plurality of elongated bag filters (106) is at least twice the average length of the plurality of cylindrical pleated filters (108).

2. The filtration system (100) of claim 1, wherein a first filter media (112) in the plurality of elongated bag filters (106) and a second filter media (116) in the plurality of cylindrical pleated filters (108) are each configured to continuously filter the gas having an average temperature of 260 °C (500 degrees Fahrenheit).

3. The filtration system of claim 1, wherein the average length of the plurality of elongated bag filters is between two and five times the average length of the plurality of cylindrical pleated filters.

4. The filtration system (100) of claim 1, wherein the filter housing (104) is rectangular and wherein the plurality of elongated bag filters (106) and the plurality of cylindrical pleated filters (108) are arranged in alternating rows.

5. The filtration system (100) of claim 4, wherein the number of elongated bag filters (106) is equal to the number of cylindrical pleated filters (108).

6. The filtration system (100) of claim 1, wherein the filter housing (104) is rectangular and wherein the plurality of elongated bag filters (106) and the plurality of cylindrical pleated filters (108) are arranged in rows where every two rows of elongated bag filters (106) is separated by one row of cylindrical pleated filters (108).

7. The filtration system (100) of claim 6, wherein there are at least three elongated bag filters (106) for every two cylindrical pleated filters (108).

8. The filtration system (100) of claim 1, wherein the filter housing (104) is rectangular and wherein the plurality of elongated bag filters (106) and the plurality of cylindrical pleated filters (108) are arranged in rows where every three rows of elongated bag filters (106) is separated by one row of cylindrical pleated filters (108).

9. The filtration system (100) of claim 8, wherein there are at least five elongated bag filters (106) for every two cylindrical pleated filters (108).

10. The filtration system (100) of claim 1, further comprising a hopper (105) situated below, and supporting, the filter housing (104).

11. The filtration system (100) of claim 1, wherein a length of each of the plurality of elongated bag filters (106) ranges from 4 meters to 15 meters.

12. The filtration system (100) of claim 1, wherein a length of each of the plurality of cylindrical pleated filters (108) ranges from 1 meter to 4 meters.

13. The filtration system (100) of claim 1, wherein each of the plurality of cylindrical pleated filters (108) comprises a media sheet (116) having radially-projecting pleats (225) that extend longitudinally along the media sheet (116), and
wherein each of the plurality of cylindrical pleated filters (108) includes an annular upstream endcap (224) which defines a central opening (160), and a cylindrical downstream endcap (230) that closes a downstream end (232) of the filter (108).

14. The filtration system (100) of claim 1, wherein each of the plurality of elongated bag filters (106) comprises a media bag (112) supported by a frame (113), wherein each elongated bag filter (106) has an open upstream end (226) and a closed downstream end (232).

15. The filtration system (100) of claim 1, wherein the filter housing (104) has an inlet (110) for receiving hot gases, the inlet (110) located in a lower portion of the filter housing (104), and an outlet (114) for discharging filtered hot gases, the outlet (114) located in an upper portion of the filter housing (104).

16. The filtration system (100) of claim 14, wherein a pressure differential between the inlet (110) and outlet (114) is less than 85% of the pressure differential that would result if each of the plurality of cylindrical pleated filters (108) was replaced by a similar number of elongated bag filters (106).

17. The filtration system (100) of claim 15, wherein a pressure differential between the inlet (110) and outlet (114) is less than 80% of the pressure differential that would result if each of the plurality of cylindrical pleated filters (108) was replaced by a similar number of elongated bag filters (106).

18. The filtration system (100) of claim 15, wherein a pressure differential between the inlet (110) and outlet (114) is less than or equal to 76% of the pressure differential that would result if each of the plurality of cylindrical pleated filters (108) was replaced by a similar number of elongated bag filters (106).

## Patentansprüche

1. Ein Filtrationssystem (100), das Folgendes beinhaltet:
ein Filtergehäuse (104);
eine Vielzahl von länglichen Beutelfiltern (106), die in dem Filtergehäuse (104) angeordnet sind;
eine Vielzahl von zylindrischen Faltenfiltern (108), die in dem Filtergehäuse (104) angeordnet sind;
wobei die Vielzahl von länglichen Beutelfiltern (106) und die Vielzahl von zylindrischen Faltenfiltern (108) in einer parallelen Filteranordnung eingerichtet sind, um ein Gas, das durch das Filtergehäuse (104) strömt, parallel zu filtern, sodass das Gas, das durch das Filtergehäuse (104) strömt, durch entweder einen der zylindrischen Faltenfilter (108) oder einen der länglichen Beutelfilter (106), aber nicht beide, fließt, und wobei die durchschnittliche Länge der Vielzahl von länglichen Beutelfiltern (106) mindestens das Doppelte der durchschnittlichen Länge der Vielzahl von zylindrischen Faltenfiltern (108) beträgt.

2. Filtrationssystem (100) gemäß Anspruch 1, wobei ein erstes Filtermedium (112) in der Vielzahl von länglichen Beutelfiltern (106) und ein zweites Filtermedium (116) in der Vielzahl von zylindrischen Faltenfiltern (108) jeweils konfiguriert sind, um das Gas, das eine durchschnittliche Temperatur von 260 °C (500 Grad Fahrenheit) aufweist, kontinuierlich zu filtern.

3. Filtrationssystem gemäß Anspruch 1, wobei die durchschnittliche Länge der Vielzahl von länglichen Beutelfiltern zwischen dem Zwei- und Fünffachen der durchschnittlichen Länge der Vielzahl von zylindrischen Faltenfiltern beträgt.

4. Filtrationssystem (100) gemäß Anspruch 1, wobei das Filtergehäuse (104) rechteckig ist und wobei die Vielzahl von länglichen Beutelfiltern (106) und die Vielzahl von zylindrischen Faltenfiltern (108) in abwechselnden Reihen eingerichtet sind.

5. Filtrationssystem (100) gemäß Anspruch 4, wobei die Anzahl von länglichen Beutelfiltern (106) gleich der Anzahl von zylindrischen Faltenfiltern (108) ist.

6. Filtrationssystem (100) gemäß Anspruch 1, wobei das Filtergehäuse (104) rechteckig ist und wobei die Vielzahl von länglichen Beutelfiltern (106) und die Vielzahl von zylindrischen Faltenfiltern (108) in Reihen eingerichtet sind, wobei jeweils zwei Reihen von länglichen Beutelfiltern (106) durch eine Reihe von zylindrischen Faltenfiltern (108) getrennt sind.

7. Filtrationssystem (100) gemäß Anspruch 6, wobei es mindestens drei längliche Beutelfilter (106) für jeweils zwei zylindrische Faltenfilter (108) gibt.

8. Filtrationssystem (100) gemäß Anspruch 1, wobei das Filtergehäuse (104) rechteckig ist und wobei die Vielzahl von länglichen Beutelfiltern (106) und die Vielzahl von zylindrischen Faltenfiltern (108) in Reihen eingerichtet sind, wobei jeweils drei Reihen von länglichen Beutelfiltern (106) durch eine Reihe von zylindrischen Faltenfiltern (108) getrennt sind.

9. Filtrationssystem (100) gemäß Anspruch 8, wobei es mindestens fünf längliche Beutelfilter (106) für jeweils zwei zylindrische Faltenfilter (108) gibt.

10. Filtrationssystem (100) gemäß Anspruch 1, das ferner einen Trichter (105) beinhaltet, der sich unter dem Filtergehäuse (104) befindet und dieses trägt.

11. Filtrationssystem (100) gemäß Anspruch 1, wobei eine Länge von jedem der Vielzahl von länglichen Beutelfiltern (106) in dem Bereich von 4 Metern bis 15 Metern liegt.

12. Filtrationssystem (100) gemäß Anspruch 1, wobei eine Länge von jedem der Vielzahl von zylindrischen Faltenfiltern (108) in dem Bereich von 1 Meter bis 4 Metern liegt.

13. Filtrationssystem (100) gemäß Anspruch 1, wobei jeder der Vielzahl von zylindrischen Faltenfiltern (108) eine Mediumlage (116) beinhaltet, die radial vorstehende Falten (225) aufweist, die sich in Längsrichtung entlang der Mediumlage (116) erstrecken, und wobei jeder der Vielzahl von zylindrischen Faltenfiltern (108) eine ringförmige stromaufwärtige Endkappe (224), die eine zentrale Öffnung (160) definiert, und eine zylindrische stromabwärtige Endkappe (230), die ein stromabwärtiges Ende (232) des Filters (108) verschließt, umfasst.

14. Filtrationssystem (100) gemäß Anspruch 1, wobei jeder der Vielzahl von länglichen Beutelfiltern (106) einen Mediumbeutel (112) beinhaltet, der von einem Rahmen (113) getragen wird,
wobei jeder längliche Beutelfilter (106) ein offenes stromaufwärtiges Ende (226) und ein geschlossenes stromabwärtiges Ende (232) aufweist.

15. Filtrationssystem (100) gemäß Anspruch 1, wobei das Filtergehäuse (104) einen Einlass (110) zum Aufnehmen von heißen Gasen, wobei sich der Einlass (110) in einem unteren Abschnitt des Filtergehäuses (104) befindet, und einen Auslass (114) zum Abgeben von gefilterten heißen Gasen, wobei sich der Auslass (114) in einem oberen Abschnitt des Filtergehäuses (104) befindet, aufweist.

16. Filtrationssystem (100) gemäß Anspruch 14, wobei ein Druckunterschied zwischen dem Einlass (110) und dem Auslass (114) weniger als 85 % des Druckunterschieds beträgt, der sich ergeben würde, wenn jeder der Vielzahl von zylindrischen Faltenfiltern (108) durch eine ähnliche Anzahl von länglichen Beutelfiltern (106) ersetzt würde.

17. Filtrationssystem (100) gemäß Anspruch 15, wobei ein Druckunterschied zwischen dem Einlass (110) und dem Auslass (114) weniger als 80 % des Druckunterschieds beträgt, der sich ergeben würde, wenn jeder der Vielzahl von zylindrischen Faltenfiltern (108) durch eine ähnliche Anzahl von länglichen Beutelfiltern (106) ersetzt würde.

18. Filtrationssystem (100) gemäß Anspruch 15, wobei ein Druckunterschied zwischen dem Einlass (110) und dem Auslass (114) weniger als oder gleich 76 % des Druckunterschieds beträgt, der sich ergeben würde, wenn jeder der Vielzahl von zylindrischen Faltenfiltern (108) durch eine ähnliche Anzahl von länglichen Beutelfiltern (106) ersetzt würde.

## Revendications

1. Un système de filtration (100) comprenant :
un boîtier de filtres (104) ;
une pluralité de filtres à sac allongés (106) disposés dans le boîtier de filtres (104) ;
une pluralité de filtres plissés cylindriques (108) disposés dans le boîtier de filtres (104) ;
dans lequel la pluralité de filtres à sac allongés (106) et la pluralité de filtres plissés cylindriques (108) sont agencés en un agencement de filtres en parallèle de façon à filtrer un gaz passant à travers le boîtier de filtres (104) en parallèle, de telle sorte que le gaz passant à travers le boîtier de filtres (104) s'écoule à travers l'un ou l'autre des filtres plissés cylindriques (108), ou l'un des filtres à sac allongés (106), mais pas les deux, et dans lequel la longueur moyenne de la pluralité de filtres à sac allongés (106) fait au moins deux fois la longueur moyenne de la pluralité de filtres plissés cylindriques (108).

2. Le système de filtration (100) de la revendication 1, dans lequel un premier média filtrant (112) dans la pluralité de filtres à sac allongés (106) et un deuxième média filtrant (116) dans la pluralité de filtres plissés cylindriques (108) sont configurés chacun pour filtrer en continu le gaz ayant une température moyenne de 260 °C (500 degrés Fahrenheit).

3. Le système de filtration de la revendication 1, dans lequel la longueur moyenne de la pluralité de filtres à sac allongés fait entre deux et cinq fois la longueur moyenne de la pluralité de filtres plissés cylindriques.

4. Le système de filtration (100) de la revendication 1, dans lequel le boîtier de filtres (104) est rectangulaire et dans lequel la pluralité de filtres à sac allongés (106) et la pluralité de filtres plissés cylindriques (108) sont agencés en rangées alternées.

5. Le système de filtration (100) de la revendication 4, dans lequel le nombre de filtres à sac allongés (106) est égal au nombre de filtres plissés cylindriques (108).

6. Le système de filtration (100) de la revendication 1, dans lequel le boîtier de filtres (104) est rectangulaire et dans lequel la pluralité de filtres à sac allongés (106) et la pluralité de filtres plissés cylindriques (108) sont agencés en rangées où toutes les deux rangées de filtres à sac allongés (106) sont séparées par une rangée de filtres plissés cylindriques (108).

7. Le système de filtration (100) de la revendication 6, dans lequel il y a au moins trois filtres à sac allongés (106) pour deux filtres plissés cylindriques (108).

8. Le système de filtration (100) de la revendication 1, dans lequel le boîtier de filtres (104) est rectangulaire et dans lequel la pluralité de filtres à sac allongés (106) et la pluralité de filtres plissés cylindriques (108) sont agencés en rangées où toutes les trois rangées de filtres à sac allongés (106) sont séparées par une rangée de filtres plissés cylindriques (108).

9. Le système de filtration (100) de la revendication 8, dans lequel il y a au moins cinq filtres à sac allongés (106) pour deux filtres plissés cylindriques (108).

10. Le système de filtration (100) de la revendication 1, comprenant en outre une trémie (105) située sous, et soutenant, le boîtier de filtres (104).

11. Le système de filtration (100) de la revendication 1, dans lequel une longueur de chaque filtre de la pluralité de filtres à sac allongés (106) va de 4 mètres à 15 mètres.

12. Le système de filtration (100) de la revendication 1, dans lequel une longueur de chaque filtre de la pluralité de filtres plissés cylindriques (108) va de 1 mètre à 4 mètres.

13. Le système de filtration (100) de la revendication 1, dans lequel chaque filtre de la pluralité de filtres plissés cylindriques (108) comprend une feuille de média (116) ayant des plis faisant saillie radialement (225) qui s'étendent longitudinalement le long de la feuille de média (116), et
dans lequel chaque filtre de la pluralité de filtres plissés cylindriques (108) inclut un capuchon d'extrémité amont annulaire (224) qui définit une ouverture centrale (160), et un capuchon d'extrémité aval cylindrique (230) qui ferme une extrémité aval (232) du filtre (108).

14. Le système de filtration (100) de la revendication 1, dans lequel chaque filtre de la pluralité de filtres à sac allongés (106) comprend un sac de média (112) soutenu par un châssis (113),
dans lequel chaque filtre à sac allongé (106) a une extrémité amont ouverte (226) et une extrémité aval fermée (232).

15. Le système de filtration (100) de la revendication 1, dans lequel le boîtier de filtres (104) a une entrée (110) destinée à recevoir des gaz chauds, l'entrée (110) étant située dans une portion inférieure du boîtier de filtres (104), et une sortie (114) destinée à évacuer des gaz chauds filtrés, la sortie (114) étant située dans une portion supérieure du boîtier de filtres (104).

16. Le système de filtration (100) de la revendication 14, dans lequel un différentiel de pression entre l'entrée (110) et la sortie (114) fait moins de 85 % du différentiel de pression qui serait obtenu si chaque filtre de la pluralité de filtres plissés cylindriques (108) était remplacé par un nombre similaire de filtres à sac allongés (106).

17. Le système de filtration (100) de la revendication 15, dans lequel un différentiel de pression entre l'entrée (110) et la sortie (114) fait moins de 80 % du différentiel de pression qui serait obtenu si chaque filtre de la pluralité de filtres plissés cylindriques (108) était remplacé par un nombre similaire de filtres à sac allongés (106).

18. Le système de filtration (100) de la revendication 15, dans lequel un différentiel de pression entre l'entrée (110) et la sortie (114) fait moins de ou est égal à 76 % du différentiel de pression qui serait obtenu si chaque filtre de la pluralité de filtres plissés cylindriques (108) était remplacé par un nombre similaire de filtres à sac allongés (106).
